# FASCICULE DE BREVET EUROPEEN

(11) **EP 4 446 150 B1**
(45) Date de publication et mention de la délivrance du brevet: **05.11.2025**
(21) Numéro de dépôt: 24163780.0
(22) Date de dépôt: 15.03.2024
(51) Int. Cl.: B60K 11/02, F01P 11/02

(54) **DISPOSITIF DE MAINTENANCE D'UN SYSTÈME THERMIQUE POUR VÉHICULE AUTOMOBILE**
WARTUNGSVORRICHTUNG FÜR EIN WÄRMESYSTEM EINES KRAFTFAHRZEUGS
DEVICE FOR MAINTAINING A THERMAL SYSTEM FOR A MOTOR VEHICLE

(30) Priorité: 22.03.2023 FR 2302692
(43) Date de publication de la demande: 16.10.2024
(73) Titulaire: FLEXIS, 92100 Boulogne-Billancourt (FR)
(72) Inventeur: CASSAIGNE, Gilles, 78280 GUYANCOURT (FR)
(74) Mandataire: Lavoix

(56) Documents cités:
- EP-A1- 3 770 010
- EP-A1- 3 885 169
- US-B2- 7 213 619

## Description

L'invention concerne un procédé et dispositif de maintenance d'un système thermique selon l'invention.

Pour minimiser la consommation d'énergie des véhicules automobiles, notamment des véhicules automobiles électriques, des circuits de refroidissement sont conçus de sorte à récupérer la chaleur générée par un élément du circuit pour réchauffer un autre élément du circuit. Plus généralement, un circuit de refroidissement doit permettre différentes circulations du fluide de refroidissement de sorte à s'adapter à différentes conditions d'utilisation du véhicule, par exemple différents besoins de chauffage de l'habitable, tout en minimisant la consommation d'énergie du véhicule. En outre, un circuit de refroidissement doit être conçu pour faciliter sa maintenance, c'est-à-dire le remplacement périodique du liquide de refroidissement.

Un procédé de maintenance d'un système thermique pour véhicule, et le dispositif correspondant, sont connus du document US 7 213 619 B2. Or la maintenance de tels circuits de refroidissement peut être complexe. Le but de l'invention est de fournir un procédé et un dispositif de maintenance remédiant aux inconvénients ci-dessus et améliorant les procédés et dispositifs connus de l'art antérieur. En particulier, l'invention permet de réaliser un procédé et un dispositif qui soient fiables et efficaces et qui permettent de simplifier la maintenance du circuit de refroidissement.

A cet effet, l'invention porte sur un procédé de maintenance d'un système thermique pour véhicule automobile, le système thermique comprenant
- un premier ensemble comportant des composants parmi lesquels
   - un moteur électrique,
   - une batterie,
   - une résistance thermique,
   - un refroidisseur relié à un circuit de climatisation d'un habitacle du véhicule automobile,
   - un radiateur,
- un deuxième ensemble comportant des conduits pour un fluide caloporteur, reliant les composants du premier ensemble, et un troisième ensemble comportant au moins une électrovanne, et notamment au plus trois électrovannes, connectées à des conduits du deuxième ensemble, le système thermique mettant en œuvre une première circulation de fluide caloporteur par lesdits conduits dans un premier circuit en série reliant entre eux tous les composants du premier ensemble lorsque la ou les électrovannes du troisième ensemble sont toutes en état de repos,
le procédé de maintenance comprenant
- une première étape de mise en œuvre de la première circulation, puis
- une deuxième étape de vidange d'un fluide caloporteur circulant dans le deuxième ensemble de conduits du système thermique, puis
- une troisième étape de remplissage du deuxième ensemble de conduits du système thermique avec un nouveau fluide caloporteur, puis
- une quatrième étape d'évacuation de bulles de gaz contenues dans le deuxième ensemble de conduits du système thermique.

Dans un mode de réalisation, la première étape comprend une mise en état de repos de chaque électrovanne du troisième ensemble, le troisième ensemble étant constitué
- d'une seule électrovanne à au moins sept voies, ou
- de deux électrovannes, parmi lesquelles une électrovanne à quatre voies, et une électrovanne à au moins trois voies, ou
- de trois électrovannes à au moins trois voies.

Dans un mode de réalisation, l'étape de vidange comprend une mise sous pression d'un air générant une évacuation forcée d'un fluide caloporteur restant dans les conduits du deuxième ensemble, et/ou
l'étape de remplissage comprend une injection sous pression d'un nouveau fluide caloporteur dans les conduits du deuxième ensemble, et/ou le système thermique comprend au moins une pompe et la quatrième étape d'évacuation de bulles de gaz contenues dans le système thermique comprend une mise en circulation du nouveau fluide caloporteur par actionnement de l'au moins une pompe.

Dans un mode de réalisation, au moins un composant du premier ensemble comprend une vis de purge et la quatrième étape d'évacuation de bulles de gaz contenues dans le système thermique comprend une évacuation de bulles de gaz par ouverture de la vis de purge.

Dans un mode de réalisation, le système thermique comprend un seul bocal de dégazage, et/ou
le bocal de dégazage est un bocal de type circulant et/ou le bocal de dégazage et le radiateur sont disposés sur des portions de circuit parallèles par lesdits conduits, et/ou
une altitude du bocal de dégazage est supérieure à une altitude de chaque composant du premier ensemble.

L'invention porte en outre sur un dispositif de maintenance d'un système thermique pour véhicule automobile, le système thermique comprenant
- un premier ensemble comportant des composants parmi lesquels
   - un moteur électrique,
   - une batterie,
   - une résistance thermique,
   - un refroidisseur relié à un circuit de climatisation d'un habitacle du véhicule automobile,
   - un radiateur,
- un deuxième ensemble comportant des conduits pour un fluide caloporteur, reliant les composants du premier ensemble, et un troisième ensemble comportant au moins une électrovanne, et notamment au plus trois électrovannes, connectées à des conduits du deuxième ensemble,

le système thermique mettant en œuvre une première circulation de fluide caloporteur par lesdits conduits dans un premier circuit en série reliant entre eux les composants du premier ensemble lorsque la ou les électrovannes du troisième ensemble sont toutes en état de repos,
le dispositif comprenant des éléments matériels et/ou logiciels mettant en œuvre le procédé selon l'invention, notamment un outil équipé d'une pompe à vide apte à aspirer un air présent dans les conduits du deuxième ensemble.

L'invention porte de plus sur un véhicule automobile équipé d'un dispositif de maintenance selon l'invention.
La figure 1 représente schématiquement un véhicule automobile équipé d'un dispositif de maintenance d'un circuit thermique selon un mode de réalisation de l'invention.
La figure 2 représente une mise en œuvre d'une première circulation de fluide caloporteur pour la maintenance d'un système thermique selon un premier mode de réalisation de l'invention.
La figure 3 représente plusieurs états de fonctionnement d'une vanne à quatre voies d'un système thermique selon un deuxième mode de réalisation de l'invention.
La figure 4 représente une mise en œuvre de la première circulation de fluide caloporteur pour la maintenance d'un système thermique selon le deuxième mode de réalisation de l'invention.
La figure 5 représente une mise en œuvre de la première circulation de fluide caloporteur pour la maintenance d'un système thermique selon un troisième mode de réalisation de l'invention.
La figure 6 est un ordinogramme d'un procédé de maintenance selon l'invention.
La figure 7 illustre une étape de mise en œuvre d'une maintenance d'un système thermique selon l'invention.

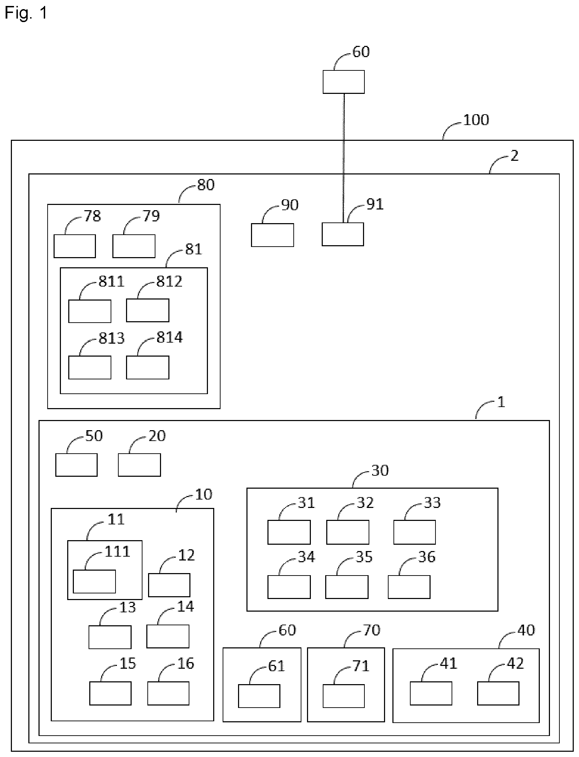

Des modes de réalisation d'un véhicule automobile 100 équipé d'un dispositif de maintenance 2 d'un système thermique 1 sont décrits ci-après en référence aux figures 1 à 5. Le véhicule automobile 100 est un véhicule automobile de toute type, notamment un véhicule de tourisme ou un véhicule utilitaire.

Dans un mode de réalisation plus spécifiquement décrit dans ce document, le véhicule automobile 100 est un véhicule électrique, et comprend un premier ensemble 10 comportant des composants parmi lesquels, un moteur électrique 11, une batterie 12, un refroidisseur 13 relié à un système de climatisation d'un habitacle du véhicule automobile 100, une résistance thermique 14, et un radiateur 15.

Dans la suite du document, le terme « refroidisseur 13 » désigne un refroidisseur relié à un système de climatisation d'un habitacle du véhicule automobile 100.

Dans la suite du document, le terme « moteur 11 » est utilisé pour désigner le moteur électrique en lui-même, ainsi que différents composants associés au moteur, et se trouvant à proximité du moteur, comme par exemple des convertisseurs de courant et un chargeur. Autrement dit, le terme « moteur 11 » englobe un ensemble de composants dédiés au fonctionnement du moteur 11, notamment la chaine de traction électrique comprenant un ou plusieurs moteurs et onduleurs électriques et/ou un ou plusieurs convertisseurs et/ou un ou plusieurs chargeurs.

Dans la suite du document, on définit un dispositif de maintenance 2 d'un système thermique 1, le système thermique 1 comprenant le premier ensemble 10. Le système thermique 1 prend en charge la gestion thermique du moteur 11, de la batterie 12, du refroidisseur 13 (notamment par un échange thermique au niveau du radiateur 15), et de la résistance chauffante 14.

Le système thermique 1 comprend en outre, un deuxième ensemble 20 comportant des conduits et un troisième ensemble 30 comportant au plus trois électrovannes 31, 32, 33, 35, 36, 37 connectées à des conduits du deuxième ensemble 20. Les vannes du troisième ensemble 30 sont agencées de sorte que, lorsqu'elles sont toutes en état de repos, le système thermique 1 met en œuvre une première circulation 101 de fluide caloporteur dans un premier circuit en série reliant entre eux les composants du premier ensemble 10.

Le radiateur 15 est un radiateur de refroidissement du véhicule. Un air traversant le radiateur 15 permet de refroidir le liquide caloporteur circulant dans les conduits du deuxième ensemble 20.

Dans les modes de réalisation présentés ci-après, le système thermique 1 comprend en outre une première pompe 41 et une deuxième pompe 42 permettant de générer une circulation de fluide caloporteur dans les conduits de deuxième ensemble 20.

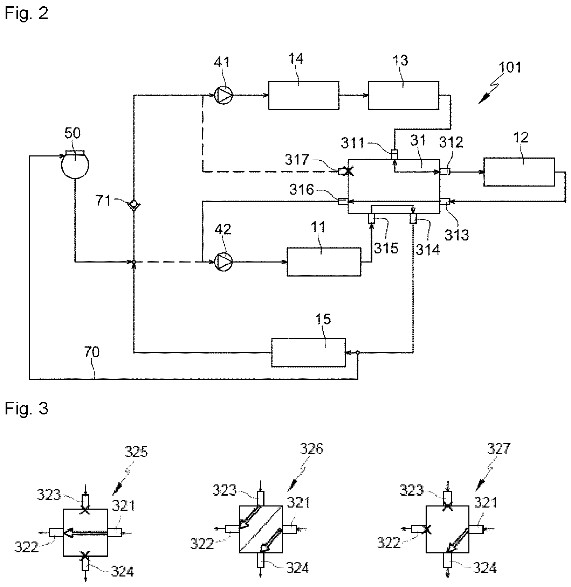

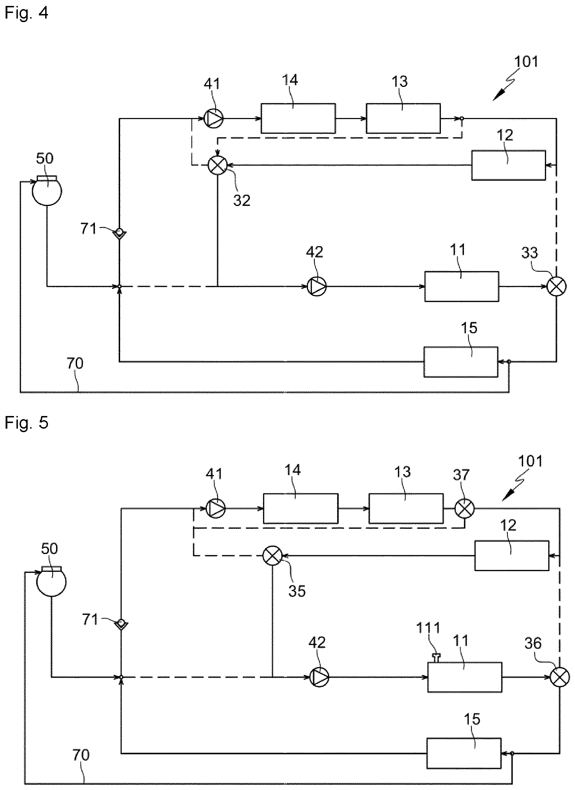

Le troisième ensemble 30 d'au plus trois électrovannes est constitué
- soit d'une seule électrovanne 31 à au moins sept voies, définissant ainsi un premier mode de réalisation du système thermique 1, représenté à la figure 2,
- soit de deux électrovannes 32, 33, dont une électrovanne 32 à quatre voies et une électrovanne 33 à au moins trois voies, définissant ainsi un deuxième mode de réalisation du système thermique 1, représenté à la figure 4,,
- soit de trois électrovannes 35, 36, 37 à au moins trois voies, définissant ainsi un troisième mode de réalisation du système thermique 1, représenté à la figure 5.

On décrit tout d'abord un système thermique 1 selon le premier mode de réalisation, permettant de mettre en œuvre notamment une première circulation 101.

Une mise en œuvre de la première circulation 101 selon le premier mode de réalisation du système thermique 1 est illustrée par la figure 2. La première circulation 101, qui crée un circuit en série de conduits reliant tous les composants du premier ensemble 10, est plus particulièrement adaptée à un remplissage du circuit thermique 1 en usine, ainsi qu'à une phase de maintenance du circuit thermique 1.

Dans le premier mode de réalisation, la première circulation 101 est avantageusement obtenue lorsque l'électrovanne 31 (à au moins 7 voies 311, 312, 313, 314, 315, 316, 317) est au repos, c'est-à-dire lorsque l'électrovanne ne reçoit pas d'ordre d'activation. Dans ce cas,
- les voies 311 et 312 sont reliées l'une à l'autre, créant un circuit reliant en série la batterie 12 à l'ensemble constitué par la résistance chauffante 14 en série avec le refroidisseur 13,
- les voies 313 et 316 sont reliées l'une à l'autre, créant un circuit en série reliant la batterie 12 au moteur 11,
- les voies 315 et 314 sont reliées l'une à l'autre, créant un circuit en série reliant entre le moteur 11 et le radiateur 15.

Ainsi, cette configuration de l'électrovanne 31 permet de vidanger et remplir les conduits du deuxième ensemble 20, sans avoir à activer l'électrovanne 31. Puis, par un simple paramétrage du régime des pompes à eau disposées sur le circuit, on peut utiliser la première circulation 101 pour chasser toutes les bulles d'air bloquées dans le circuit. Ces traitements seront développés plus loin dans le document.

Dans le deuxième mode de réalisation du système thermique 1, l'ensemble d'électrovannes 3 est constitué de deux électrovannes 32, 33 dont au moins une électrovanne 32 à quatre voies et une électrovanne à au moins trois voies 33.

La figure 3 représente un schéma de fonctionnement de l'électrovanne à quatre voies 32 d'un système thermique selon le deuxième mode de réalisation de l'invention, dans lequel :
- une première voie 321 est reliée par un conduit à la batterie 12,
- une deuxième voie 322 est reliée à la première pompe 41,
- une troisième voie 323 est reliée au refroidisseur 13, et
- une quatrième voie 324 est reliée à la deuxième pompe 42.

De plus, la figure 3 décrit trois configurations 325, 326, 327 mises en œuvre par l'électrovanne à quatre voies 32, chaque configuration étant obtenue en connectant au moins deux voies prises parmi les quatre voies 321, 322, 323, 324 de l'électrovanne 32 :
- la première configuration 325 relie la batterie 12 à la première pompe 41,
- la deuxième configuration 326 relie le refroidisseur 13 à la première pompe 41 et la batterie à la deuxième pompe 42,
- la troisième configuration 327 relie la batterie 12 à la deuxième pompe 42.

Une électrovanne à au moins trois voies 33 et les trois configurations 325, 326, 327, 328 décrites pour l'électrovanne 32 permettent de mettre en œuvre la première circulation 101.

Dans le deuxième mode de réalisation, la première circulation 101 est avantageusement obtenue lorsque
- l'électrovanne 32 est dans la troisième configuration 327, c'est-à-dire l'électrovanne 32 relie la batterie 12 à la deuxième pompe 42, et
- l'électrovanne 33 relie le moteur 11 au radiateur.

Ainsi, tous les composants de l'ensemble de composants 10 sont reliés entre eux en série.

Dans le troisième mode de réalisation du système thermique 1, l'ensemble d'électrovannes 3 est constitué de trois électrovannes 35, 36, 37 à au moins trois voies.

Dans le troisième mode de réalisation, la première circulation 101 est avantageusement obtenue lorsque
- l'électrovanne 35 relie la batterie 12 à la deuxième pompe 42, et
- l'électrovanne 36 relie le moteur 11 au radiateur.

Dans la suite du document, le terme « bocal » ou « bocal de dégazage » est utilisé pour nommer un vase d'expansion, également appelé « nourrice ». Un bocal d'un système thermique est pressurisé et sert à créer une pression suffisante à l'entrée de chaque pompe à eau du système thermique pour ne pas générer de cavitation dans la pompe à eau. En effet, si la pression au niveau d'une pompe est trop faible, un phénomène de cavitation peut apparaitre, c'est-à-dire une ébullition du fluide caloporteur au niveau des pales de la pompe, ce qui endommage les pales de la pompe.

Avantageusement, le bocal de dégazage 50 peut être un bocal de type circulant, c'est-à-dire le bocal 50 comporte un premier embout d'arrivée du liquide caloporteur placé dans sa partie haute, et un deuxième embout de sortie du liquide placé en son point le plus bas.

Dans un mode de réalisation préférentiel, le système thermique 1 comprend un seul bocal de dégazage 50, ce qui facilite les opérations de maintenance du système thermique 1.

De plus, la position du bocal 50 sur le circuit du système thermique peut être choisie pour favoriser un dégazage rapide et simple du circuit, notamment en créant un circuit reliant en série tous les composants du premier ensemble. Avantageusement, le bocal 50 peut être disposé sur une boucle de circuit 70 en parallèle avec le composant offrant la plus forte résistance au passage du fluide caloporteur, comme le radiateur 15. Les bulles d'air sont alors poussées vers le bocal 50, le bocal 50 permettant une séparation des phases liquides et gazeuses.

Par ailleurs, une altitude du bocal de dégazage 50 est préférentiellement supérieure à une altitude de chaque composant du premier ensemble 10 de composants.

Le système thermique peut en outre comprendre un clapet anti-retour 71 ou vanne anti-retour 71 pour empêcher le fluide caloporteur de se déplacer en sens inverse d'un sens de déplacement souhaité. Un tel phénomène peut se produire notamment du fait de pressions négatives dans un conduit en amont d'une pompe.

Dans un mode de réalisation avantageux, le dispositif de maintenance 2 comprend
- le système thermique 1, et
- un contrôleur 90 qui détermine une transition entre un mode de roulage et un mode d'entretien du véhicule automobile 100.

En d'autres termes, le contrôleur 90 permet notamment d'initier une phase de maintenance du système thermique 1.

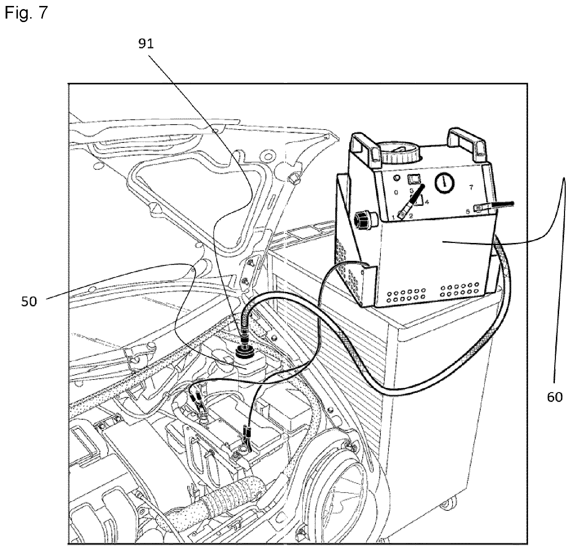

Le dispositif de maintenance 2 comprend avantageusement un moyen de connexion 91 à un outil 60, utilisé lors d'une phase de maintenance du véhicule automobile 100. Le moyen de connexion 91 peut être localisé au niveau du bocal 50, comme cela est illustré par la figure 7. L'outil 60 est équipé d'une pompe à vide apte à aspirer l'air présent dans les conduits de l'ensemble 20. Par ailleurs, l'outil 60 permet un remplissage des conduits avec un nouveau fluide caloporteur.

Dans un mode de réalisation avantageux, le dispositif de maintenance 2 comprend en outre les moyens de mise en œuvre d'un procédé de maintenance selon l'invention. Notamment, le dispositif de maintenance 2 comprend une unité de traitement 80 comprenant un microprocesseur 81, une mémoire 78 et des interfaces de communication 79.

Le dispositif de maintenance 2 et particulièrement le microprocesseur 81, comprend principalement les modules suivants qui coopèrent entre eux :
- un module 811 de mise en œuvre de la première circulation , ce module pouvant coopérer avec le contrôleur 90, les électrovannes du troisième ensemble 30, les première et deuxième pompes 41, 42,
- un module 812 vidange d'un fluide caloporteur circulant dans l'ensemble de conduits 20 du système thermique, ce module pouvant coopérer avec le moyen de connexion 91 et l'outil 60,
- un module 813 de remplissage de l'ensemble de conduits du système thermique, ce module pouvant coopérer avec le moyen de connexion 91 et l'outil 60,
- un module 814 d'évacuation de bulles de gaz contenues dans l'ensemble de conduits 20, ce module pouvant coopérer avec les première et deuxième pompes 41, 42.

Le véhicule automobile 100, en particulier le dispositif de maintenance 2, comprend de préférence tous les éléments matériels et/ou logiciels configurés de sorte à mettre en œuvre le procédé défini dans l'objet de l'invention ou le procédé décrit plus bas.

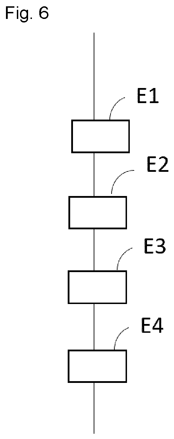

En référence à la figure 6, on décrit un procédé de maintenance du système thermique 1 précédemment décrit; comprenant :
- une première étape E1 de mise en œuvre de la première circulation 101, puis
- une deuxième étape E2 de vidange d'un fluide caloporteur circulant dans l'ensemble de conduits 20 du système thermique 1, puis
- une troisième étape E3 de remplissage de l'ensemble de conduits 20 du système thermique 1 avec un nouveau fluide caloporteur, puis
- une quatrième étape E4 d'évacuation de bulles de gaz contenues dans l'ensemble de conduits 20 du système thermique 1.

La première étape E1 comprend une réception d'un ordre de maintenance du système thermique 1, l'ordre pouvant être issu du contrôleur 90.

Suite à la réception d'un ordre de maintenance, on configure les électrovannes du système thermique 1 de sorte à permettre une mise en œuvre de la première circulation 101 de fluide caloporteur. Pour cela on commande les électrovannes du troisième ensemble 30 pour mettre en œuvre un circuit reliant en série les composants du premier ensemble 10. Avantageusement, le système thermique 1 est conçu de sorte que la circulation 101 est mise en œuvre lorsque les électrovannes sont en état de repos.

En d'autres termes, la première étape E1 comprend une mise en état de repos de l'au moins une électrovanne du troisième ensemble 30, le troisième ensemble 30 étant constitué
- d'une seule électrovanne 31 à au moins sept voies, ou
- de deux électrovannes 32, 33, parmi lesquelles une électrovanne 32 à quatre voies, et une électrovanne 33 à au moins trois voies, ou
- de trois électrovannes 35, 36, 37 à au moins trois voies.

Puis on enchaine sur l'étape E2 de vidange du fluide caloporteur contenu dans le système thermique 1. Après ouverture du bouchon du vase d'expansion, des bouchons de vidange et une déconnexion avantageuse de certaines conduites constituant l'ensemble 20, le fluide caloporteur s'écoule naturellement hors de l'ensemble de conduits 20, et hors des composants qu'il traverse, comme par exemple la batterie 12, par effet gravitationnel. Le fluide caloporteur est ainsi pour tout ou partie automatiquement remplacé par de l'air.

Une fois le système thermique 1 vidangé par écoulement sous pression atmosphérique, on peut utiliser un outil 60 de mise sous pression d'air des conduits afin d'évacuer le fluide caloporteur restant dans le circuit. A cet effet, on raccorde l'outil 60 au bocal 50, comme cela est illustré par la figure 7.

L'étape de vidange E2 comprend une mise sous pression d'air du circuit caloporteur générant une pression supérieure à la pression atmosphérique dans les conduits du deuxième ensemble 20. A cet effet, grâce à une pompe à air, l'outil 60 évacue le fluide caloporteur restant qui est présent dans les conduits de l'ensemble 20. L'outil 60 crée ainsi une pression d'air dans les conduits de l'ensemble 20, notamment la pression à l'intérieur des conduits qui est comprise entre 1,5 et 3 bar, préférentiellement 2 bar.

Puis on enchaine sur l'étape E3 de remplissage des conduits avec un nouveau fluide caloporteur, après avoir remplacé ou repositionné chacun des bouchons de vidange. L'étape de remplissage E3 comprend une mise en dépression du circuit par la pompe à air, puis une injection sous pression d'un nouveau fluide caloporteur dans les conduits du deuxième ensemble 20. L'outil 60 est ainsi apte à créer une dépression d'air dans les conduits de l'ensemble 20, notamment la pression à l'intérieur des conduits est de 900 millibar.

A cet effet, on raccorde les conduits de l'ensemble 20 à une réserve de fluide caloporteur faisant partie de l'outil 60, la réserve de fluide étant à pression atmosphérique. Le fluide caloporteur va être aspiré dans les conduits de l'ensemble 20, du fait de la dépression préalablement créée dans les conduits. Ainsi, un phénomène d'équilibrage de pression permet de remplir les conduits de l'ensemble 20 avec un nouveau fluide caloporteur. Cependant, le remplissage -bien que facilité par l'outil 60-n'est pas parfait, car il peut rester une grande quantité d'air dans les conduits et/ou les composants du système thermique 1.

Dans l'étape E4 de dégazage, on actionne une circulation de fluide caloporteur dans tous les conduits de l'ensemble 20. En d'autres termes, on met en œuvre la première circulation 101, notamment en actionnant les pompes 41, 42 du système thermique 1. Avantageusement, la mise en œuvre de la première circulation 101 permet de déplacer des poches d'air résiduelles jusqu'au bocal de dégazage. En amont de la sous-étape E14, c'est-à-dire impérativement avant le démarrage des pompes 41, 42, on peut ouvrir des vis de purges 111 manuelles positionnées sur des points hauts locaux, comme par exemple sur le moteur 11.

En d'autres termes,
- l'étape E2 de vidange comprend une aspiration du fluide caloporteur générant une pression inférieure à la pression atmosphérique dans les conduits du deuxième ensemble 20, et/ou
- l'étape E3 de remplissage comprend une injection sous pression d'un nouveau fluide caloporteur dans le deuxième ensemble 20 de conduits, et/ou
- le système thermique 1 comprend au moins une pompe 41, 42 et l'étape E4 d'évacuation de bulles de gaz contenues dans le système thermique 1 comprend une mise en circulation du nouveau fluide par actionnement de l'au moins une pompe 41, 42.

En complément ou alternativement, l'étape E3 de remplissage comprend une injection sous pression du nouveau fluide caloporteur dans le deuxième ensemble 50 de conduits.

En complément ou alternativement, le système thermique 1 comprend au moins une pompe 41, 42 et l'étape d'évacuation de bulles de gaz contenues dans le système thermique comprend une mise en circulation du nouveau fluide par actionnement de l'au moins une pompe.

En outre, dans un mode de réalisation, le radiateur comprend une vis de purge, et la sous-étape de dégazage comprend une évacuation de bulles de gaz par ouverture de la vis de purge.

Finalement le procédé de maintenance et le dispositif de maintenance selon l'invention présentent plusieurs avantages.

En premier lieu, le procédé de maintenance et le dispositif de maintenance selon l'invention permettent un gain de temps sur des tâches de remplissage du circuit de refroidissement en usine. En effet, le système thermique selon l'invention ne comprend qu'un seul bocal, ce qui réduit le temps de remplissage en usine par rapport à des systèmes thermiques comprenant deux bocaux ou plus. Les tâches de remplissage peuvent en outre être exécutées avec une seule machine de remplissage, alors que pour des circuits de refroidissement comprenant plusieurs bocaux, il était parfois nécessaire d'investir dans plusieurs machines pour gagner du temps sur la phase de remplissage.

De plus, le procédé de maintenance et le dispositif de maintenance selon l'invention permettent des gains de temps de maintenance en après-vente. En effet, grâce à la position optimale du bocal du circuit de refroidissement dans le système, le bocal alimentant directement les deux pompes à eau, le temps nécessaire à un technicien pour remplir le circuit de refroidissement est réduit. De plus, un mode de circulation du fluide de refroidissement, correspondant à la première circulation précédemment décrite, a été conçu pour faciliter le dégazage du circuit de refroidissement après un remplissage effectué lors d'une visite d'entretien du véhicule automobile. Ce mode permet de dégazer en même temps tous les composants du circuit de refroidissement via le bocal monté en parallèle du radiateur. Le temps nécessaire pour dégazer le circuit de refroidissement est fortement réduit ce qui participe à la diminution du TCO (pour l'acronyme « Total Cost of Ownership ») du véhicule, c'est-à-dire à la diminution du coût global de possession du véhicule.

## Revendications

1. Procédé de maintenance d'un système thermique (1) pour véhicule automobile (100), le système thermique (1) comprenant
• un premier ensemble (10) comportant des composants parmi lesquels
- un refroidisseur (13) relié à un circuit de climatisation d'un habitacle du véhicule automobile,
- un radiateur (15),
• un deuxième ensemble (20) comportant des conduits pour un fluide caloporteur, reliant les composants du premier ensemble, et un troisième ensemble (30) comportant au moins une électrovanne, et notamment au plus trois électrovannes, connectées à des conduits du deuxième ensemble (20),
le système thermique (1) mettant en œuvre une première circulation (101) de fluide caloporteur par lesdits conduits dans un premier circuit en série reliant entre eux tous les composants du premier ensemble (10) lorsque la ou les électrovannes du troisième ensemble sont toutes en état de repos,
le procédé de maintenance étant **caractérisé en ce que** ledit premier ensemble (10) comprend également un moteur électrique (11), une batterie (12), et une résistance thermique (14), et **en ce que** le procédé de maintenance comprend
- une première étape (E1) de mise en œuvre de la première circulation (101), puis
- une deuxième étape (E2) de vidange d'un fluide caloporteur circulant dans le deuxième ensemble de conduits (20) du système thermique (1), puis
- une troisième étape (E3) de remplissage du deuxième ensemble (20) de conduits du système thermique (1) avec un nouveau fluide caloporteur, puis
- une quatrième étape (E4) d'évacuation de bulles de gaz contenues dans le deuxième ensemble (20) de conduits du système thermique (1).

2. Procédé de maintenance selon la revendication précédente, **caractérisé en ce que** la première étape (E1) comprend une mise en état de repos de chaque électrovanne du troisième ensemble (30), le troisième ensemble (30) étant constitué
- d'une seule électrovanne (31) à au moins sept voies, ou
- de deux électrovannes (32, 33), parmi lesquelles une électrovanne (32) à quatre voies, et une électrovanne (33) à au moins trois voies, ou
- de trois électrovannes (35, 36, 37) à au moins trois voies.

3. Procédé de maintenance selon l'une des revendications précédentes, **caractérisé en ce que** l'étape de vidange (E2) comprend une mise sous pression d'un air générant une évacuation forcée d'un fluide caloporteur restant dans les conduits du deuxième ensemble (20), et/ou
**en ce que** l'étape de remplissage (E3) comprend une injection sous pression d'un nouveau fluide caloporteur dans les conduits du deuxième ensemble (20),
et/ou **en ce que** le système thermique (1) comprend au moins une pompe (41, 42) et la quatrième étape (E4) d'évacuation de bulles de gaz contenues dans le système thermique (1) comprend une mise en circulation du nouveau fluide caloporteur par actionnement de l'au moins une pompe (41, 42).

4. Procédé de maintenance selon l'une des revendications précédentes, au moins un composant (11) du premier ensemble (10) comprenant une vis de purge (111), **caractérisé en ce que** la quatrième étape (E4) d'évacuation de bulles de gaz contenues dans le système thermique (1) comprend une évacuation de bulles de gaz par ouverture de la vis de purge (111).

5. Procédé de maintenance selon l'une des revendications précédentes, **caractérisé en ce que** le système thermique (1) comprend un seul bocal de dégazage (50), et/ou **en ce que** le bocal de dégazage (50) est un bocal de type circulant et/ou **en ce que** le bocal de dégazage (50) et le radiateur (15) sont disposés sur des portions de circuit parallèles par lesdits conduits, et/ou **en ce qu'**une altitude du bocal de dégazage (50) est supérieure à une altitude de chaque composant du premier ensemble (10).

6. Dispositif (2) de maintenance d'un système thermique (1) pour véhicule automobile (100), le système thermique (1) comprenant
• un premier ensemble (10) comportant des composants parmi lesquels
- un refroidisseur (13) relié à un circuit de climatisation d'un habitacle du véhicule automobile,
- un radiateur (15),
• un deuxième ensemble (20) comportant des conduits pour un fluide caloporteur, reliant les composants du premier ensemble, et un troisième ensemble (30) comportant au moins une électrovanne, et notamment au plus trois électrovannes, connectées à des conduits du deuxième ensemble (20),
le système thermique (1) mettant en œuvre une première circulation (101) de fluide caloporteur par lesdits conduits dans un premier circuit en série reliant entre eux les composants du premier ensemble (10) lorsque la ou les électrovannes du troisième ensemble sont toutes en état de repos,
le dispositif étant **caractérisé en ce que** ledit premier ensemble (10) comprend un moteur électrique (11), une batterie (12), une résistance thermique (14), et **en ce que** le dispositif comprend des éléments matériels et/ou logiciels mettant en œuvre le procédé selon l'une des revendications 1 à 5, notamment un outil (60) équipé d'une pompe à vide apte à aspirer un air présent dans les conduits du deuxième ensemble (20).

7. Véhicule automobile (100) équipé d'un dispositif de maintenance (2) selon la revendication 6

## Patentansprüche

1. Verfahren zur Wartung eines thermischen Systems (1) für Kraftfahrzeug (100), das thermische System (1) umfassend
• eine erste Anordnung (10), umfassend Komponenten, darunter
- ein Kühlgerät (13), der mit einem Klimakreislauf eines Innenraums des Kraftfahrzeugs verbunden ist,
- einen Kühler (15),
• eine zweite Anordnung (20), umfassend Leitungen für ein Wärmeträgerfluid, die die Komponenten der ersten Anordnung verbinden, und eine dritte Anordnung (30), umfassend mindestens ein Magnetventil und insbesondere höchstens drei Magnetventile, die mit Leitungen der zweiten Anordnung (20) verbunden sind,
wobei das thermische System (1) eine erste Zirkulation (101) von Wärmeträgerfluid durch die genannten Leitungen in einem ersten in Reihe geschalteten Kreislauf implementiert, der alle Komponenten der ersten Anordnung (10) miteinander verbindet, wenn das oder die Magnetventile der dritten Anordnung alle in Ruhezustand sind,
wobei das Wartungsverfahren **dadurch gekennzeichnet ist, dass** die genannte erste Anordnung (10) auch einen Elektromotor (11), eine Batterie (12) und einen thermischen Widerstand (14) umfasst, und dass das Wartungsverfahren Folgendes umfasst
- einen ersten Schritt (E1) eines Implementierens der ersten Zirkulation (101), dann
- einen zweiten Schritt (E2) zum Evakuieren eines Wärmeträgerfluids, das in der zweiten Anordnung von Leitungen (20) des thermischen Systems (1) zirkuliert, dann
- einen dritten Schritt (E3) zum Füllen der zweiten Anordnung (20) von Leitungen des thermischen Systems (1) mit einem neuen Wärmeträgerfluid, dann
- einen vierten Schritt (E4) zum Evakuieren von Gasblasen, die in der zweiten Anordnung (20) von Leitungen des thermischen Systems (1) enthalten sind.

2. Wartungsverfahren nach dem vorherigen Anspruch, **dadurch gekennzeichnet, dass** der erste Schritt (E1) eine Ruhestellung von jedem Magnetventil der dritten Anordnung (30) umfasst, wobei die dritte Anordnung (30) aus Folgendem besteht
- einem einzelnen Magnetventil (31) mit mindestens sieben Wegen, oder
- zwei Magnetventilen (32, 33), darunter ein Magnetventil (32) mit vier Wegen und ein Magnetventil (33) mit mindestens drei Wegen, oder
- drei Magnetventilen (35, 36, 37) mit mindestens drei Wegen.

3. Wartungsverfahren nach einem der vorherigen Ansprüche, **dadurch gekennzeichnet, dass** der Entleerungsschritt (E2) eine Druckbeaufschlagung mit Luft umfasst, was eine Zwangsevakuierung eines in den Leitungen der zweiten Anordnung (20) verbliebenen Wärmeträgerfluids erzeugt, und/oder
dass der Füllschritt (E3) ein Einspritzen unter Druck eines neuen Wärmeträgerfluids in die Leitungen der zweiten Anordnung (20) umfasst,
und/oder dass das thermische System (1) mindestens eine Pumpe (41, 42) umfasst und der vierte Schritt (E4) zum Evakuieren von in dem thermischen System (1) enthaltenen Gasblasen eine Zirkulation des neuen Wärmeträgerfluids durch Betätigung der mindestens einen Pumpe (41, 42) umfasst.

4. Wartungsverfahren nach einem der vorherigen Ansprüche, wobei mindestens eine Komponente (11) der ersten Anordnung (10) eine Entlüftungsschraube (111) umfasst, **dadurch gekennzeichnet, dass** der vierte Schritt (E4) zum Evakuieren von Gasblasen, die in dem thermischen System (1) enthalten sind, ein Evakuieren von Gasblasen durch Öffnen der Entlüftungsschraube (111) umfasst.

5. Wartungsverfahren nach einem der vorherigen Ansprüche, **dadurch gekennzeichnet, dass** das thermische System (1) einen einzigen Entgasungsbehälter (50) umfasst, und/oder dass der Entgasungsbehälter (50) ein Behälter von dem zirkulierenden Typ ist und/oder dass der Entgasungsbehälter (50) und der Kühler (15) auf Abschnitten von Kreisläufen angeordnet sind, die durch die genannten Leitungen parallel verlaufen, und/oder dass eine Höhe des Entgasungsbehälters (50) größer ist als eine Höhe jeder Komponente der ersten Anordnung (10).

6. Vorrichtung (2) zur Wartung eines thermischen Systems (1) für Kraftfahrzeug (100), das thermische System (1) umfassend
• eine erste Anordnung (10), umfassend Komponenten, darunter
- ein Kühlgerät (13), der mit einem Klimakreislauf eines Innenraums des Kraftfahrzeugs verbunden ist,
- einen Kühler (15),
• eine zweite Anordnung (20), umfassend Leitungen für ein Wärmeträgerfluid, die die Komponenten der ersten Anordnung verbinden, und eine dritte Anordnung (30), umfassend mindestens ein Magnetventil und insbesondere höchstens drei Magnetventile, die mit Leitungen der zweiten Anordnung (20) verbunden sind,
wobei das thermische System (1) eine erste Zirkulation (101) von Wärmeträgerfluid durch die genannten Leitungen in einem ersten in Reihe geschalteten Kreislauf implementiert, der die Komponenten der ersten Anordnung (10) miteinander verbindet, wenn das oder die Magnetventile der dritten Anordnung alle in Ruhezustand sind,
wobei die Vorrichtung **dadurch gekennzeichnet ist, dass** die erste Anordnung (10) einen Elektromotor (11), eine Batterie (12), einen thermischen Widerstand (14) umfasst, und dass die Vorrichtung Hardware- und/oder Softwareelemente umfasst, die das Verfahren nach einem der Ansprüche 1 bis 5 umsetzen, insbesondere ein Werkzeug (60), das mit einer Vakuumpumpe ausgestattet ist, die eine in den Leitungen der zweiten Anordnung (20) vorhandene Luft absaugen kann.

7. Kraftfahrzeug (100), das mit einer Wartungsvorrichtung (2) nach Anspruch 6 ausgestattet ist.

## Claims

1. A method of maintaining a heating system (1) for a motor vehicle (100), the heating system (1) comprising
• a first assembly (10) comprising components including
- a cooler (13) connected to an air conditioning circuit in a passenger compartment of the motor vehicle,
- a radiator (15),
• a second assembly (20) comprising conduits for a heat transfer fluid, connecting the components of the first assembly, and a third assembly (30) comprising at least one solenoid valve, and in particular at most three solenoid valves, connected to conduits of the second assembly (20),
the thermal system (1) implementing a first circulation (101) of heat transfer fluid through the said conduits in a first circuit in series linking together all the components of the first assembly (10) when the solenoid valve or valves of the third assembly are all in the state of rest,
the maintenance method being **characterised in that** said first assembly (10) also comprises an electric motor (11), a battery (12), and a thermal resistor (14), and **in that** the maintenance method comprises
- a first step (E1) of implementing the first circulation (101), then
- a second step (E2) of emptying a heat transfer fluid circulating in the second set of pipes (20) of the thermal system (1), then
- a third step (E3) of filling the second assembly (20) of conduits of the heating system (1) with a new heat transfer fluid, then
- a fourth step (E4) of evacuating gas bubbles contained in the second assembly (20) of conduits of the heating system (1).

2. Maintenance method according to the preceding claim, **characterised in that** the first step (E1) comprises placing each solenoid valve of the third assembly (30) in the rest state, the third assembly (30) consisting of
- a single solenoid valve (31) with at least seven channels, or
- two solenoid valves (32, 33), including one four-way solenoid valve (32) and one solenoid valve (33) with at least three channels, or
- three solenoid valves (35, 36, 37) with at least three channels.

3. Maintenance method according to one of the preceding claims, **characterised in that** the emptying step (E2) comprises pressurising an air generating a forced evacuation of a heat transfer fluid remaining in the conduits of the second assembly (20), and/or
**in that** the filling step (E3) comprises pressurised injection of a new heat transfer fluid into the conduits of the second assembly (20),
and/or **in that** the thermal system (1) comprises at least one pump (41, 42) and the fourth step (E4) of evacuating gas bubbles contained in the heating system (1) comprises circulating the new heat transfer fluid by actuating the at least one pump (41, 42).

4. Maintenance method according to one of the preceding claims, at least one component (11) of the first assembly (10) comprising a bleed screw (111), **characterised in that** the fourth step (E4) of evacuating gas bubbles contained in the heating system (1) comprises evacuating gas bubbles by opening the bleed screw (111).

5. Maintenance method according to one of the preceding claims, **characterised in that** the heating system (1) comprises a single degassing tank (50), and/or **in that** the degassing tank (50) is a circulating-type tank and/or **in that** the degassing tank (50) and the radiator (15) are arranged on parallel circuit portions by means of said conduits, and/or **in that** an altitude of the degassing tank (50) is greater than an altitude of each component of the first assembly (10).

6. Device (2) for maintaining a heating system (1) for a motor vehicle (100), the heating system (1) comprising
• a first assembly (10) comprising components including
- a cooler (13) connected to an air conditioning circuit in a passenger compartment of the motor vehicle,
- a radiator (15),
• a second assembly (20) comprising conduits for a heat transfer fluid, connecting the components of the first assembly, and a third assembly (30) comprising at least one solenoid valve, and in particular at most three solenoid valves, connected to conduits of the second assembly (20),
the thermal system (1) implementing a first circulation (101) of heat transfer fluid through the said conduits in a first series circuit linking together the components of the first assembly (10) when the solenoid valve or valves of the third assembly are all in the state of rest,
the device being **characterized in that** the said first assembly (10) comprises an electric motor (11), a battery (12) and a thermal resistor (14), and **in that** the device comprises hardware and/or software elements implementing the method according to one of claims 1 to 5, in particular a tool (60) equipped with a vacuum pump capable of sucking an air present in the conduits of the second assembly (20).

7. Motor vehicle (100) equipped with a maintenance device (2) according to claim 6.
